# EUROPÄISCHE PATENTSCHRIFT

(11) **EP 2 944 896 B1**
(45) Veröffentlichungstag und Bekanntmachung des Hinweises auf die Patenterteilung: **18.09.2019**
(21) Anmeldenummer: 15167781.2
(22) Anmeldetag: 15.05.2015
(51) Int. Cl.: F24S 10/50, F24S 20/50

(54) **VERFAHREN ZUR HERSTELLUNG EINES SONNENKOLLEKTORS UND DURCH DIESES VERFAHREN HERGESTELLTER SONNENKOLLEKTOR AUS WENIGSTENS EINEM FOLIENMATERIAL**
METHOD FOR PRODUCING A SOLAR COLLECTOR AND SOLAR COLLECTOR MADE BY THIS METHOD FROM AT LEAST ONE SHEET MATERIAL
PROCÉDÉ DE FABRICATION D'UN CAPTEUR SOLAIRE ET CAPTEUR SOLAIRE FABRIQUÉ PAR LEDIT PROCÉDÉ À PARTIR D'AU MOINS UN MATÉRIAU LAMELLAIRE

(30) Priorität: 15.05.2014 DE 102014007058
(43) Veröffentlichungstag der Anmeldung: 18.11.2015
(73) Patentinhaber: van 't Oever, Edwin, 26931 Elsfleth (DE)
(72) Erfinder: van 't Oever, Edwin, 26931 Elsfleth (DE)
(74) Vertreter: Jabbusch, Matthias

(56) Entgegenhaltungen:
- WO-A2-2011/041818
- DE-A1- 2 515 398
- DE-U1- 20 003 837
- FR-A1- 2 470 934
- GB-A- 1 161 887
- US-A- 4 203 425

## Beschreibung

Die Erfindung betrifft ein Verfahren zum Herstellen eines Sonnenkollektors aus wenigstens einem Folienmaterial, das zu wenigstens einer Wärmeträgerleitung verschweißt wird. Außerdem betrifft die Erfindung einen Sonnenkollektor aus wenigstens einem Folienmaterial und wenigstens einer mit dem Folienmaterial ausgebildeten Wärmeträgerleitung.

Bekannte Sonnenkollektoren dienen der Umwandlung der von der Sonne ausgesendeten Strahlungsenergie in Wärme. Diese Umwandlung erfordert einen in der Wärmeträgerleitung geführten fluiden Wärmeträger. Da die Herstellungskosten derartiger Sonnenkollektoren von grundlegender Bedeutung für deren Wirtschaftlichkeit sind, wurden bereits verschiedentlich Sonnenkollektoren vorgeschlagen, für deren konstruktiven Aufbau ausschließlich Kunststofffolien verwendet werden. Derartige Sonnenkollektoren sind beispielsweise aus den deutschen Offenlegungsschriften DE 32 24 688 A1, DE 29 10 050 A1 oder DE 26 02 928 A1 bekannt. Bei diesen bekannten Sonnenkollektoren sind die Wärmeträgerleitungen für flüssige Wärmeträgermedien konzipiert. Aus der deutschen Offenlegungsschrift DE 34 16 174 A1 ist hingegen ein Solartrockner mit einem Solardach zur Luftanwärmung und einem Trocknungsbehälter zur Trocknung eines Gutes mit der erwärmten Luft bekannt. Aus der Offenlegungsschrift DE 27 01 198 A1 ist ein ähnlicher Solartrockner bekannt, dessen Sonnenkollektor aus einer Glasplatte und einer geschwärzten Aluminiumplatte besteht. Derartige Solartrockner sind jedoch für die Trocknung größerer Mengen landwirtschaftlichen Mähgutes denkbar ungeeignet, da ihr konstruktiver Aufbau für eine bei landwirtschaftlichen Mähgütern erforderlichen Trocknerleistung aus Gründen zu hoher Herstellungskosten ungeeignet ist.

Aus der WO 2011/041818 A2 ist ein weiterer Sonnenkollektor bekannt, bei dem die Abdeckung und das Absorbermaterial einstückig miteinander ausgebildet sein. Eine mit einem Fluid befüllbare Kammer kann mit dem Absorbermaterial beschichtet sein. Zwischen dem Absorbermaterial und der Oberfläche der Kammer können auch weitere Schichten angeordnet sein. Weiterhin kann die Abdeckung Innerhalb des von der Abdeckung begrenzten Raumes und außerhalb der mit dem Füllfluid befullten Kammern schlauchartige Ströraungskammern für das Wärme aufnehmende Fluid aufweisen. Die Strömungskammern können durch innerhalb des von der Abdeckung umgrenzten Raumes und mit der in das Innere dieses Raumes weisenden Flächen der Abdeckung verbundenen Stegen gebildet werden. Die Abdeckung und die Stege können aus Kunststoff, beispielsweise aus einer Kunststofffolie gebildet sein.

Der Erfindung liegt die Aufgabe zugrunde, ein Verfahren zur Herstellung eines Sonnenkollektors sowie einen Sonnenkollektor aus wenigstens einem Folienmaterial aufzuzeigen, mit dem Luft besonders effizient erwärmt werden kann.

Diese Aufgabe ist erfindungsgemäß durch ein Verfahren mit den Merkmalen des Anspruchs 1 und einen Sonnenkollektor mit den Merkmalen des Patentanspruchs 5 gelöst. Vorteilhafte Weiterbildungen der Erfindung sind in den jeweils auf diese Patentansprüche rückbezogenen Unteransprüchen angegeben.

Verfahrenstechnisch zeichnet sich die Erfindung dadurch aus, dass mit dem Folienmaterial aus wenigstens drei Folienlagen ein wenigstens eine Absorberfolie aufweisendes Schichtwerk aufgebaut wird, dass die Folienlagen des Schichtwerkes mittels parallel laufender Schweißnähte zu einem Folienverbund miteinander verschweißt werden, dass wenigstens eine der äußeren Folienlagen des Folienverbundes entlang der Schweißnähte in Folienstreifen zerschnitten wird, und dass die Folienstreifen entlang ihrer Schnittkanten mit wenigstens einem Transparentfolienmaterial zu einem Hohlkammerstrang verschweißt werden. Das Schichtwerk kann durch Aufeinanderlegen einzelner Folien oder durch Falten wenigstens einer Folie zu dem Schichtwerk aufgebaut werden. Das Verschweißen der Folienlagen des Schichtwerkes zu dem Folienverbund erfolgt vorzugsweise mittels eines Wärmeeintrages. Grundsätzlich ist es jedoch ebenso denkbar, die Folienlagen des Schichtwerkes mittels eines Diffusionsklebstoffes miteinander zu verschweißen. Das Zerschneiden einer äußeren Folienlage des Folienverbundes in einzelne Folienstreifen erfolgt mittels eines Schneidwerkzeuges, das sowohl als Schneidmesser als auch als Schneidbrenner ausgebildet sein kann. Das Verschweißen der Folienstreifen mit einem Transparentfolienmaterial kann ebenfalls wahlweise mittels eines Wärmeeintrages oder mittels eines Diffusionsklebstoffes erfolgen. Eine besonders kostengünstige Herstellung des Sonnenkollektors erlaubt das erfindungsgemäße Verfahren, wenn das Schichtwerk ausschließlich aus Folienlagen der Absorberfolie aufgebaut wird, da diese im Vergleich zum Transparentfolienmaterial kostengünstiger verfügbar ist. Eine weitere Verringerung der Herstellungskosten ist dadurch erreicht, dass sämtliche im Rahmen des erfindungsgemäßen Verfahrens durchzuführenden Verfahrensschritte ohne einen Einsatz von Verbindungsmitteln oder Hilfsstoffen auskommen können. Mit dem Hohlkammerstrang ist schließlich ein Endloserzeugnis ausgebildet, welches zur leistungsorientierten Auslegung des Sonnenkollektors besonders kostengünstig auf ein beliebiges Maß abgelängt werden kann.

Nach einer ersten Weiterbildung des erfindungsgemäßen Verfahrens werden die beiden ungeschnittenen, jedoch miteinander verschweißten Folienlagen des Folienverbundes zu einem Isolierkammerprofil aufgestellt. Der Hohlkammerstrang setzt sich so aus der Wärmeträgerleitung und dem die Wärmeträgerleitung gegen Wärmeverluste in das Erdreich oder einen anderen Untergrund schützenden Isolierkammerprofil zusammen. Wird mit dem Folienmaterial ein mehr als drei Folienlagen aufweisendes Schichtwerk aufgebaut, können weitere ungeschnittene Folienlagen des Folienverbundes zu einem mehrschichtigen Isolierkammerprofil aufgestellt werden. Zum Aufstellen der ungeschnittenen Folienlagen des Folienverbundes zu dem unteren Isolierkammerprofil werden die zwischen den Folienlagen ausgebildeten und beiderseits von Schweißnähten begrenzten Folienschläuche über einen Ventilator oder dergleichen mit einem Gas oder Gasgemisch, insbesondere mit Luft aufgeblasen. Nach einer besonders vorteilhaften Ausgestaltung werden die Folienlagen von der Abluft eines mit dem erfindungsgemäßen Sonnenkollektor betriebenen Trockners durchströmt.

Um die Wärmeträgerleitung auch gegen Wärmeverluste in die äußere Atmosphäre schützen zu können, wird das mit den Folienstreifen zu verschweißende Transparentfolienmaterial wenigstens doppelt gelegt, wobei die Folienlagen des doppelt gelegten Transparentfolienmaterials dann zu einem Isolierkammerprofil aufgestellt werden. Der Hohlkammerstrang setzt sich damit aus der Wärmeträgerleitung, einem diese vor Wärmeverlusten in das Erdreich schützenden Isolierkammerprofil sowie einem die Wärmeträgerleitung gegen Wärmeverluste in die äußere Atmosphäre schützenden Isolierkammerprofil zusammen. Wird das mit dem Folienstreifen zu verschweißende Transparentfolienmaterial mehr als doppelt gelegt, können die Folienlagen des Transparentfolienmaterials auch zu einem mehrschichtigen Isolierkammerprofil aufgestellt werden. Zum Aufstellen der ungeschnittenen Folienlagen des Transparentfolienmaterials zu dem oberen Isolierkammerprofil werden die zwischen den Folienlagen ausgebildeten und mit beiderseits von den Schweißnähten begrenzten Folienschläuche ebenfalls mit einem Gas oder Gasgemisch, insbesondere mit Luft aufgeblasen.

Nach einer nächsten Weiterbildung des erfindungsgemäßen Verfahrens wird der Hohlkammerstrang in einzelne Strangabschnitte zerschnitten, wobei die Strangabschnitte in einer Kollektorebene flächig nebeneinanderliegend zu wenigstens einer Strangschleife miteinander verschweißt werden. Zur Ausbildung einer derartigen Strangschleife wird wenigstens eine der einen Strangabschnitt begrenzenden Schnittkanten mit einer zur Stranglängsachse schräggestellten Schneide ausgeführt. Anschließend werden die Strangabschnitte mit ihren Schnittkanten unter Beteiligung der schrägen Schnittkanten in der Kollektorebene flächig nebeneinanderliegend zu der Strangschleife miteinander verschweißt. In einer besonders einfachen Ausführungsform wird der Hohlkammerstrang in wenigstens drei einzelne Strangabschnitte zerschnitten, von denen zwei zueinander parallel ausgerichtete und vorzugsweise aneinander anliegende Strangabschnitte über 45°-Gehrungsschnitte mit einem dritten, rechtwinklig zu den anderen Strangabschnitten ausgerichteten Strangabschnitt verschweißt werden. Selbstverständlich sind Ausführungsformen mit Strangabschnitten bevorzugt, bei denen sich für den Hohlkammerstrang widerstandsreduzierte Strömungsverläufe mit kleineren Abknickwinkeln oder größeren Krümmungsradien ergeben.

Der erfindungsgemäße Sonnenkollektor zeichnet sich dadurch aus, dass er durch das erfindungsgemäße Verfahren hergestellt wird, dass das Folienmaterial wenigstens eine die Wärmeträgerleitung oberseitig ausbildende Transparentfolie aufweist, dass das Folienmaterial wenigstens eine die Wärmeträgerleitung unterseitig ausbildende Absorberfolie aufweist, und dass mit dem Folienmaterial ein die Wärmeträgerleitung sowie wenigstens eine Isolierkammeranordnung aufweisender Hohlkammerstrang ausgebildet ist. Die Transparentfolie ist vorzugsweise eine UV-beständige Gewächshausfolie und die Absorberfolie ist vorzugsweise eine schwarze, ebenfalls UV-beständige Mulchfolie, wobei als Folienmaterialien ausschließlich miteinander verschweißbare oder verklebbare Kunststoffe zu verwenden sind.Die Isolierkammeranordnung weist vorzugsweise eine Vielzahl am Umfang der Wärmeträgerleitung ausgebildete Isolierkammern auf, mit welchen Wärmeverluste aus einem in der Wärmeträgerleitung geführten Wärmeträgermedium heraus vorteilhaft klein gehalten sind. Die Wärmeträgerleitung weist hingegen vorzugsweise eine Vielzahl einzelner Leitungsadern auf, mit denen eine in einer Kollektorebene in sich möglichst geschlossen ausgebildete Kollektorfläche ausgebildet ist.

Nach einer ersten Weiterbildung der Erfindung ist die Isolierkammeranordnung zumindest teilweise mit der Transparentfolie ausgebildet. Eine mit Transparentfolie ausgebildete Isolierkammeranordnung ist vorzugsweise auf der Oberseite der Wärmeträgerleitung gelegen und schützt die Wärmeträgerleitung vor Wärmeverlusten in die äußere Atmosphäre. Grundsätzlich ist es jedoch ebenso denkbar, dass die Isolierkammeranordnung zumindest teilweise mit der Absorberfolie ausgebildet ist. Eine mit Absorberfolie ausgebildete Isolierkammeranordnung ist vorzugsweise auf der Unterseite der Wärmeträgerleitung gelegen und schützt die Wärmeträgerleitung vor Wärmeverlusten in das Erdreich.

Nach einer nächsten Weiterbildung der Erfindung weist der Hohlkammerstrang einzelne, in einer Kollektorebene flächig nebeneinander angeordnete und zu wenigstens einer Strangschleife zusammengesetzte Strangabschnitte auf. Eine derartige Strangschleife ist durch eine im Hohlkammerstrang ausgebildete Richtungsumkehr oder Kehrtwende gekennzeichnet, mit der die freien Enden des Hohlkammerstranges eine zueinander parallele Ausrichtung erhalten. Selbstverständlich liegt es im Rahmen der Erfindung, die in der Kollektorebene flächig nebeneinander angeordneten Strangzuschnitte zu mehreren Strangschleifen zusammenzusetzen, so dass der Hohlkammerstrang einen mäanderförmigen Richtungsverlauf erhält.

Nach einer besonders vorteilhaften Weiterbildung der Erfindung ist der Hohlkammerstrang mit dem Scheitelbereich seiner Strangschleife in einer Aufwickelvorrichtung festgesetzt. Die Aufwickelvorrichtung ermöglicht ein bedarfsweises Aufwickeln des Folienstranges außerhalb der für den erfindungsgemäßen Sonnenkollektor vorgesehenen Betriebszeiten. Auf diese Weise können für den Betrieb des erfindungsgemäßen Sonnenkollektors benötigte Flächen außerhalb der Betriebszeiten anderweitig, insbesondere landwirtschaftlich genutzt werden. Die Aufwickelvorrichtung weist vorzugsweise eine Wickeltrommel mit einer der Breite der Strangschleife, insbesondere einer der doppelten Breite des Hohlkammerstranges entsprechenden Trommelbreite sowie einen motorischen oder manuellen Trommelantrieb auf. In einer Variante weist die Aufwickelvorrichtung ein auf einer Rollbahn aufstehendes Fahrwerk auf.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines Schichtwerkes in einem erfindungsgemäßen Verfahren zur Herstellung eines Sonnenkollektors;
- Fig. 2:: eine perspektivische Ansicht eines Folienverbundes in dem Verfahren gemäß Fig. 1;
- Fig. 3:: eine perspektivische Ansicht des Folienverbundes mit einer in dem Verfahren gemäß den Fig. 1 und 2 in Folienstreifen zerschnittenen äußeren Folienlage;
- Fig. 4:: eine perspektivische Ansicht eines Hohlkammerstranges in dem Verfahren gemäß den Fig. 1 bis 3;
- Fig. 5:: eine perspektivische Ansicht des Hohlkammerstranges mit in dem Verfahren gemäß den Fig. 1 bis 4 zu Isolierkammerprofilen aufgestellten ungeschnittenen Folienlagen;
- Fig. 6:: eine perspektivische Ansicht des erfindungsgemäßen Sonnenkollektors nach Ablauf des Verfahrens gemäß den Fig. 1 bis 5; und

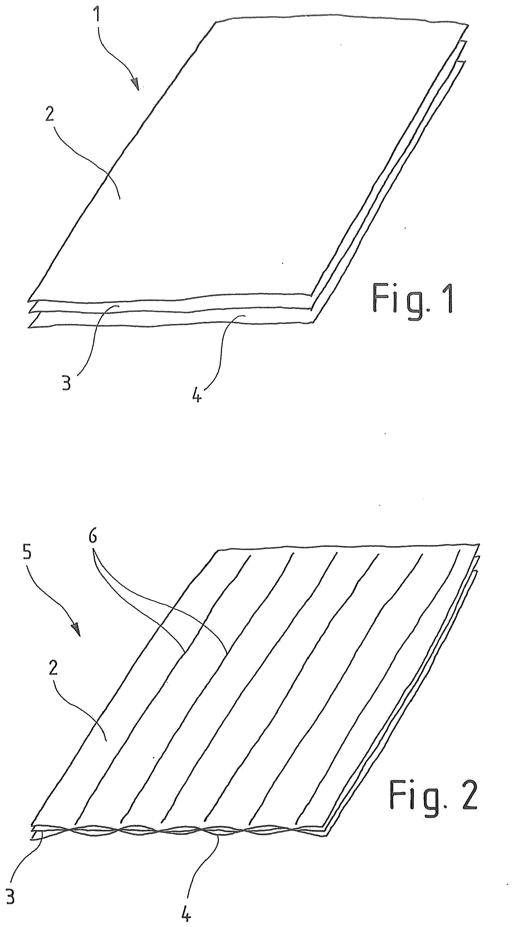

Die Fig. 1 zeigt eine perspektivische Ansicht eines Schichtwerkes 1 aus einem drei Folienlagen 2, 3, 4 aufweisenden Folienmaterial, wobei die obere Folienlage 2 aus einer Absorberfolie ausgebildet ist.

Die Fig. 2 zeigt eine perspektivische Ansicht eines Folienverbundes 5, bei dem die Folienlagen 2, 3, 4 des Schichtwerkes 1 (siehe Fig. 1) mittels parallel laufender Schweißnähte 6 miteinander verschweißt wurden.

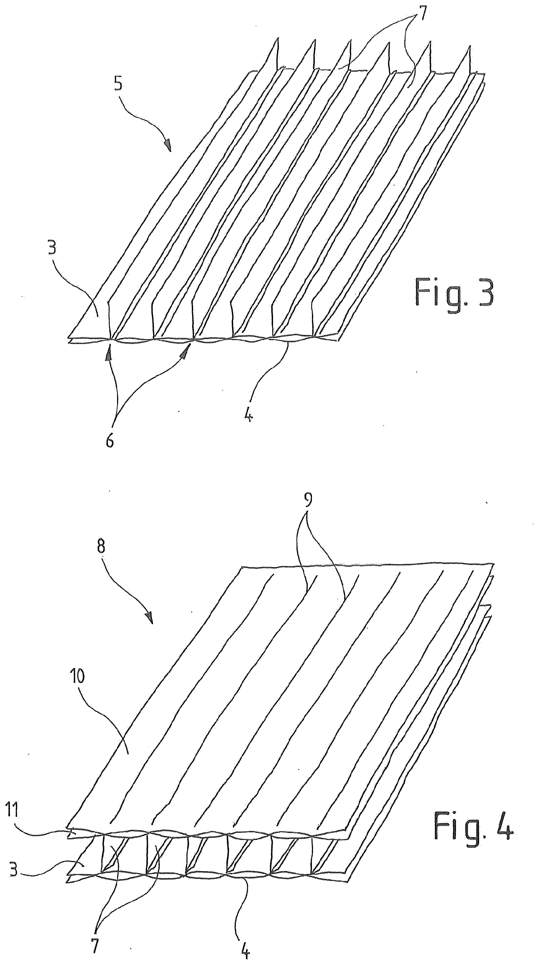

Die Fig. 3 zeigt eine perspektivische Ansicht des Folienverbundes 5, bei dem die äußere Folienlage 2 (siehe Fig. 2) entlang der Schweißnähte 6 in Folienstreifen 7 zerschnitten wurde.

Die Fig. 4 zeigt eine perspektivische Ansicht eines Hohlkammerstranges 8, bei dem die Folienstreifen 7 mittels Schweißnähten 9 entlang ihrer Schnittkanten mit einem zwei Folienlagen 10, 11 aufweisenden Transparentfolienmaterial verschweißt wurden. Gleiche Folienteile sind mit gleichen Bezugszahlen versehen.

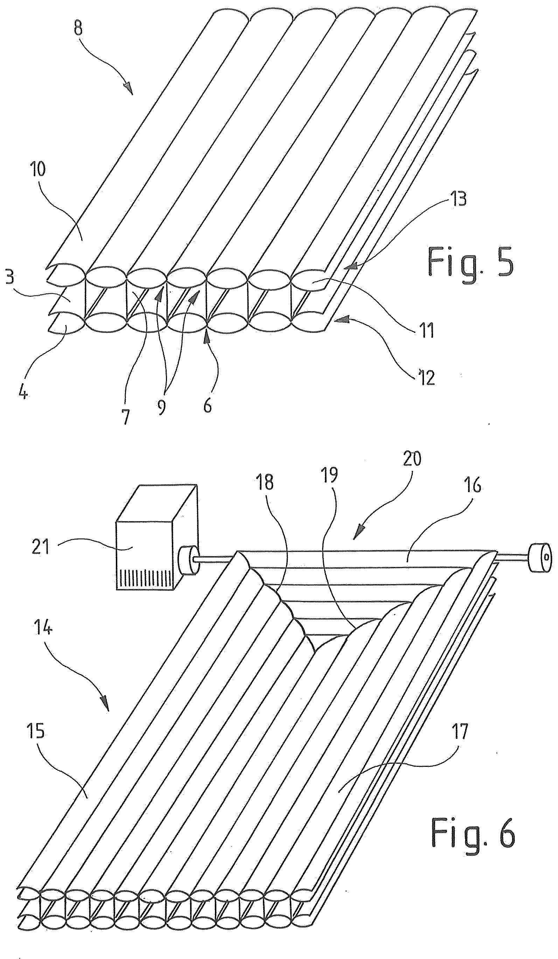

Die Fig. 5 zeigt eine perspektivische Ansicht des Hohlkammerstranges 8, bei dem die beiden ungeschnittenen Folienlagen 3, 4 des Folienverbundes 5 (siehe Fig. 3) zu einem unteren Isolierkammerprofil 12 aufgestellt wurden, und die Folienlagen 10, 11 des Transparentfolienmaterials zu einem oberen Isolierkammerprofil 13 aufgestellt wurden. Gleiche Folienteile sind hier ebenfalls mit gleichen Bezugszahlen versehen.

Die Fig. 6 zeigt eine perspektivische Ansicht eines erfindungsgemäßen Sonnenkollektors 14, bei dem der Hohlkammerstrang 8 (siehe Fig. 5) in drei Strangabschnitte 15, 16, 17 zerschnitten und die Strangabschnitte 15, 16, 17 in einer Kollektorebene flächig nebeneinander liegend zu einer Strangschleife miteinander verschweißt wurden. Zur Ausbildung dieser Strangschleife liegen die Strangabschnitte 15 und 17 in einer parallelen Anordnung aneinander an und sind über 45°-Gehrungsschnitte 18, 19 mit dem rechtwinklig zu diesen beiden Strangabschnitten 15, 17 ausgerichteten Strangabschnitt 16 verschweißt. Außerdem weist der Sonnenkollektor 14 eine im Scheitelbereich 20 seiner Strangschleife angeordnete Aufwickelvorrichtung 21 auf.

Die Offenbarung der Erfindung ist nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum Herstellen eines Sonnenkollektors aus wenigstens einem Folienmaterial, das zu wenigstens einer Wärmeträgerleitung verschweißt wird, **dadurch gekennzeichnet,**
**dass** mit dem Folienmaterial aus wenigstens drei Folienlagen (2, 3, 4) ein wenigstens eine Absorberfolie aufweisendes Schichtwerk (1) aufgebaut wird, dass die Folienlagen (2, 3, 4) des Schichtwerkes (1) mittels parallellaufender Schweißnähte (6) zu einem Folienverbund (5) miteinander verschweißt werden,
**dass** wenigstens eine der äußeren Folienlagen (2, 4) des Folienverbundes (5) entlang der Schweißnähte (6) in Folienstreifen (7) zerschnitten wird, und dass die Folienstreifen (7) entlang ihrer Schnittkanten (9) mit wenigstens einem Transparentfolienmaterial zu einem Hohlkammerstrang (8) verschweißt werden.

2. Verfahren nach Anspruch 1, **dadurch gekennzeichnet, dass** die beiden ungeschnittenen Folienlagen (2, 3 bzw. 3, 4) des Folienverbundes (5) zu einem Isolierkammerprofil (12) aufgestellt werden.

3. Verfahren nach Anspruch 1 oder 2, **dadurch gekennzeichnet, dass** das mit den Folienstreifen (7) zu verschweißende Transparentfolienmaterial wenigstens doppelt gelegt wird und dass die Folienlagen (10, 11) des doppelt gelegten Transparentfolienmaterials zu einem Isolierkammerprofil (13) aufgestellt werden.

4. Verfahren nach einem der Ansprüche 1 bis 3, **dadurch gekennzeichnet, dass** der Hohlkammerstrang (8) in einzelne Strangabschnitte (15, 16, 17) zerschnitten wird, dass die Strangabschnitte (15, 16, 17) in einer Kollektorebene flächig nebeneinanderliegend zu wenigstens einer Strangschleife miteinander verschweißt werden.

5. Sonnenkollektor aus wenigstens einem Folienmaterial und wenigstens einer mit dem Folienmaterial ausgebildeten Wärmeträgerleitung, wobei
das Folienmaterial wenigstens eine die Wärmeträgerleitung oberseitig ausbildende Transparenzfolie sowie
wenigstens eine die Wärmeträgerleitung unterseitig ausbildende Absorberfolie aufweist, und
mit dem Folienmaterial ein die Wärmeträgerleitung und wenigstens eine Isolierkammeranordnung aufweisender Hohlkammerstrang (8) ausgebildet ist, hergestellt mit einem Verfahren nach einem der Ansprüche 1 bis 4.

6. Sonnenkollektor nach Anspruch 5, **dadurch gekennzeichnet, dass** die Isolierkammeranordnung zumindest teilweise mit der Transparenzfolie ausgebildet ist.

7. Sonnenkollektor nach Anspruch 5 oder 6, **dadurch gekennzeichnet, dass** die Isolierkammeranordnung zumindest teilweise mit der Absorberfolie ausgebildet ist.

8. Sonnenkollektor nach einem der Ansprüche 5 bis 7, **dadurch gekennzeichnet, dass** der Hohlkammerstrang (8) einzelne, in einer Kollektorebene flächig nebeneinander angeordnete und zu wenigstens einer Strangschleife zusammengesetzte Strangabschnitte (15, 16, 17) aufweist.

9. Sonnenkollektor nach Anspruch 8, **dadurch gekennzeichnet, dass** der Hohlkammerstrang (8) mit dem Scheitelbereich (20) seiner Strangschleife in einer Aufwickelvorrichtung (21) festgesetzt ist.

## Claims

1. A method for producing a solar collector from at least one sheet material, which is welded to form at least one heat transfer line, **characterized in that** the sheet material is used in at least three layers of sheets (2, 3, 4) to build up a layered material (1) having at least one absorber sheet, **in that** the layers of sheets (2, 3, 4) of the layered material (1) are welded together into a laminate (5) via welding seams (6) extending parallel to each other, **in that** at least one of the outer layers of sheets (2, 4) of the laminate (5) is cut into sheet strips (7) along the welding beads (6), and **in that** the sheet strips (7) are welded along their cutting edges (9) with at least one transparent sheet material into a hollow strand (8) .

2. The method according to Claim 1, **characterized in that** the two uncut layers of sheets (2, 3, or 3, 4) of the laminate (5) are raised into an insulation cavity profile (12).

3. The method according to Claim 1 or 2, **characterized in that** the transparent sheet material to be welded to the sheet strips (7) is laid down in at least double layers and **in that** the layers of sheets (10, 11) of the double-layered transparent sheet material are raised into a insulation cavity profile (13).

4. The method according to any one of Claims 1 to 3, **characterized in that** the hollow strand (8) is cut into individual strand sections (15, 16, 17), and **in that** the strand sections (15, 16, 17) are welded together into at least one loop while lying adjacent to each other in a collector plane.

5. A solar collector made from at least one sheet material and at least one heat transfer line formed from the sheet material, wherein the sheet material includes at least one transparent sheet forming the top side of the heat transfer line and at least one absorber sheet forming the bottom side of the heat transfer line, and wherein the sheet material is used to form a hollow strand (8) having the heat transfer line and at least one insulation cavity arrangement, produced using the method according any one of Claims 1 to 4.

6. The solar collector according to Claim 5, **characterized in that** the insulation cavity arrangement is at least partially formed with the transparent sheet.

7. The solar collector according to Claim 5 or 6, **characterized in that** the insulation cavity arrangement is at least partially formed with the absorber sheet.

8. The solar collector according to any one of Claims 5 to 7, **characterized in that** the hollow strand (8) has individual strand sections (15, 16, 17) arranged adjacent to each other in a collector plane and assembled into at least one loop.

9. The solar collector according to Claim 8, **characterized in that** the hollow strand (8) is fixed into a winding device (21) at the crown area (20) of its loop.

## Revendications

1. Procédé destiné à fabriquer un capteur solaire en au moins une matière en film, que l'on soude sur au moins un conduit d'agent caloporteur, **caractérisé**
**en ce qu'**avec la matière en film constituée d'au moins trois couches de film (2, 3, 4), on construit un ouvrage stratifié (1) comportant au moins un film absorbant,
**en ce qu'**on soude les unes aux autres les couches de film (2, 3, 4) de l'ouvrage stratifié (1) au moyen de soudures (6) s'écoulant à la parallèle en un film composite (5),
**en ce qu'**on coupe au moins l'une des couches de film (2, 4) extérieures du film composite (5) le long des soudures (6) en rubans de films (7), et
**en ce qu'**on soude les rubans de films (7) le long de leurs arêtes de coupe (9) avec au moins une matière en film transparent en un boudin alvéolaire (8).

2. Procédé selon la revendication 1, **caractérisé en ce qu'**on monte les deux couches de film (2, 3 ou 3, 4) non coupées du film composite (5) en un profilé alvéolaire isolant (12).

3. Procédé selon la revendication 1 ou 2, **caractérisé en ce qu'**on pose au moins en double couche la matière en film transparent qui doit être soudée avec les rubans de films (7) et **en ce qu'**on monte les couches de film (10, 11) de la matière en film transparent posée en double couche sur le profilé alvéolaire isolant (13).

4. Procédé selon l'une quelconque des revendications 1 à 3, **caractérisé en ce qu'**on coupe le boudin alvéolaire (8) en segments de boudin (15, 16, 17) individuels, **en ce qu'**on soude les uns aux autres les segments de boudin (15, 16, 17) côte à côte à plat dans un plan collecteur en au moins un ruban de boudin.

5. Capteur solaire constitué d'au moins une matière en film et d'au moins un conduit d'agent caloporteur conçu avec la matière en film,
la matière en film comportant au moins un film transparent formant le conduit d'agent caloporteur sur sa face supérieure et
au moins un film absorbant formant le conduit d'agent caloporteur sur sa face inférieure, et
avec la matière en film étant conçu un boudin alvéolaire (8) comportant le conduit d'agent caloporteur et au moins un ensemble de boudin alvéolaire isolant, fabriqué par un procédé selon l'une quelconque des revendications 1 à 4.

6. Capteur solaire selon la revendication 5, **caractérisé en ce que** l'ensemble de boudin alvéolaire isolant est conçu au moins en partie par le film transparent.

7. Capteur solaire selon la revendication 5 ou 6, **caractérisé en ce que** l'ensemble de boudin alvéolaire isolant est conçu au moins en partie par le film absorbant.

8. Capteur solaire selon l'une quelconque des revendications 5 à 7, **caractérisé en ce que** le boudin alvéolaire (8) comporte des segments de boudin (15, 16, 17), placés à plat côte à côte dans un plan collecteur et assemblés en au moins une boucle de boudins.

9. Capteur solaire selon la revendication 8, **caractérisé en ce que** le boudin alvéolaire (8) est fixé par la zone de crête (20) de sa boucle de boudin dans un dispositif d'enroulement (21).
